# FASCICULE DE BREVET EUROPEEN

(11) **EP 4 025 374 B1**
(45) Date de publication et mention de la délivrance du brevet: **23.10.2024**
(21) Numéro de dépôt: 20760868.8
(22) Date de dépôt: 27.08.2020
(51) Int. Cl.: B23K 11/00, B23K 11/11, B23K 11/36

(54) **PINCE DE SOUDURE PAR POINTS**
PUNKTSCHWEISSZANGE
SPOT WELDING TONGS

(30) Priorité: 02.09.2019 FR 1909618
(43) Date de publication de la demande: 13.07.2022
(73) Titulaire: Renault s.a.s, 92100 Boulogne Billancourt (FR)
(72) Inventeur: SERRELI, Laurent, 78190 Trappes (FR)
(74) Mandataire: Renault Group
(86) Numéro de dépôt international: PCT/EP2020/073958
(87) Numéro de publication internationale: WO 2021/043662

(56) Documents cités:
- CN-Y- 201 089 061
- JP-A- H0 890 246

## Description

L'invention concerne une pince de soudure par points selon le préambule de la revendication 1 (voir, par example CN201089061 Y), utile notamment dans le domaine de l'industrie automobile pour souder des pièces de tôle métallique entre elles.

On connaît déjà des procédés de soudure dans lesquels la pince de soudure est manipulée par un robot comme c'est le cas du document FR2810568.

De par sa cinématique et des capteurs dont il dispose, le robot permet généralement une bonne répétabilité du positionnement de la pince de soudure, et par conséquent une bonne précision de positionnement de chaque point de soudure.

Lorsque la pince de soudure est montée sur une potence manipulée par un opérateur humain, notamment pour réaliser des points de soudure sur des zones d'ouvrants de véhicule, des décalages naturels, même infimes, peuvent se produire d'un positionnement à l'autre.

Pour remédier aux inconvénients posés par l'état antérieur de la technique, l'invention a pour objet une pince de soudure par point selon la revendication 1 comprenant un bras inférieur portant une première électrode, et un bras supérieur portant une deuxième électrode pour effectuer un point de soudure entre une première pièce de tôle et une deuxième pièce de tôle par mise en contact de la première électrode avec la première pièce de tôle et de la deuxième électrode la deuxième pièce de tôle, caractérisée en ce que le bras inférieur comprend un guide de butée contre la première pièce de tôle.

Selon l'invention, le guide de buté comprend une excroissance qui s'étend le long du bras inférieur dans une direction perpendiculaire au bras supérieur.

Selon l'invention, le guide de buté comprend un corps de guide solidaire de l'excroissance et agencé pour coulisser le long d'une partie du bras inférieur.

Plus particulièrement, la partie du bras inférieur est cylindrique et le corps de guide est un tube de diamètre intérieur juste supérieur à un diamètre extérieur de la partie du bras inférieur pour permettre un coulissement et/ou une rotation du corps de guide sur la partie du bras inférieur.

Encore plus particulièrement, le corps de guide comprend une vis pour bloquer le coulissement et/ou la rotation du corps de guide sur la partie du bras inférieur.

De préférence, la vis comporte au moins une ailette pour faciliter un blocage et un déblocage du coulissement et/ou de la rotation du corps de guide sur la partie du bras inférieur.

Avantageusement, le guide de butée est montable et démontable sur la pince de soudure par coulissement du corps de guide sur la partie du bras inférieur.

Avantageusement aussi, l'excroissance comporte une extrémité arrondie de mise en contact avec la pièce de tôle.

L'invention a aussi pour objet un procédé de soudure par points selon la revendication 7 d'une première pièce de tôle, notamment profilée, sur une deuxième pièce de tôle de carrosserie au moyen d'une pince de soudure, comportant des étapes consistant à :
- monter libre en translation un guide de butée sur un bras inférieur de la pince de soudure ;
- amener une première électrode solidaire du bras inférieur contre la première pièce de tôle en un point précis de la première pièce de tôle ;
- déplacer le guide de butée jusqu'à le mettre en contact avec la première pièce de tôle ;
- bloquer en translation le guide de butée sur le bras inférieur de la pince de soudure ;
- amener la pince de soudure successivement contre plusieurs points de la première pièce de tôle pour effectuer une succession de points de soudure..

D'autres avantages et caractéristiques de l'invention apparaîtront à la lecture de la description détaillée de modes de mise en oeuvre et de réalisation, à titre d'exemples illustratifs et non limitatif, en référence aux dessins annexés dans lesquels :
[Fig. 1] montre schématiquement une pince de soudure de l'état antérieur de la technique amenée en position ouverte malencontreusement en bord de tôle ;
[Fig. 2] montre schématiquement la pince de soudure de la figure 1 en position fermée malencontreusement en bord de tôle ;
[Fig. 3] montre schématiquement la pince de soudure de l'état antérieur de la technique amenée en position ouverte malencontreusement en fond de profilé ;
[Fig. 4] montre schématiquement la pince de soudure de la figure 3 en position difficilement fermée malencontreusement en fond de profilé ;
[Fig. 5] montre schématiquement une pince de soudure conforme à l'invention amenée en position ouverte au point de tôle conforme de soudure ;
[Fig. 6] montre schématiquement la pince de soudure de la figure 5 en position fermée au point de tôle conforme de soudure ;
[Fig. 7] montre schématiquement un guide de butée conforme à l'invention.

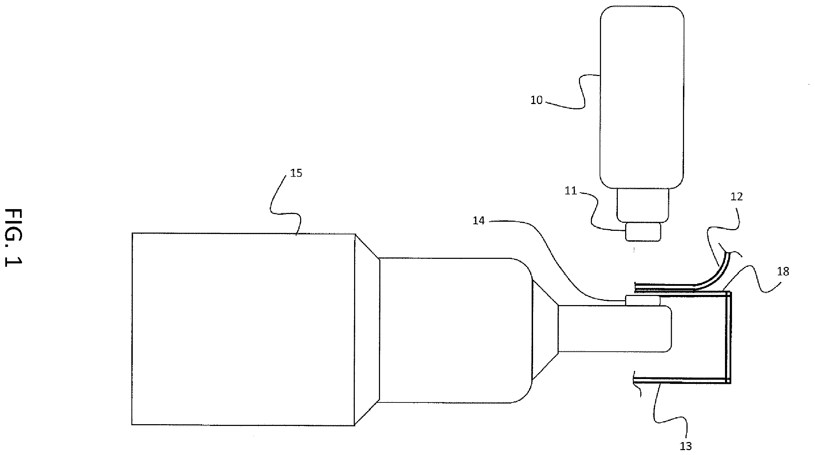

[Fig. 1] montre une pince de soudure par point comprenant un bras inférieur 15 qui porte une électrode 14, et un bras supérieur 10 qui porte une électrode 11. Une pièce de tôle 13 constitue par exemple un profilé, représenté en coupe transversale, destiné à recevoir un joint d'étanchéité sur un ouvrant de véhicule automobile. L'ouvrant est illustré partiellement sur la figure 1 par une extrémité de pièce de tôle 12, représentée elle aussi en coupe transversale, sur laquelle on souhaite fixer le profilé par une succession de points de soudure le long du profilé.

Pour recevoir le joint d'étanchéité (non représenté), la pièce de tôle 13 constituant le profilé, a sensiblement une forme de U à deux branches. Une branche supérieure 18 est préalablement plaquées contre une face inférieure de la pièce de tôle 12 par des moyens (non représentés) largement connus en soi par ailleurs.

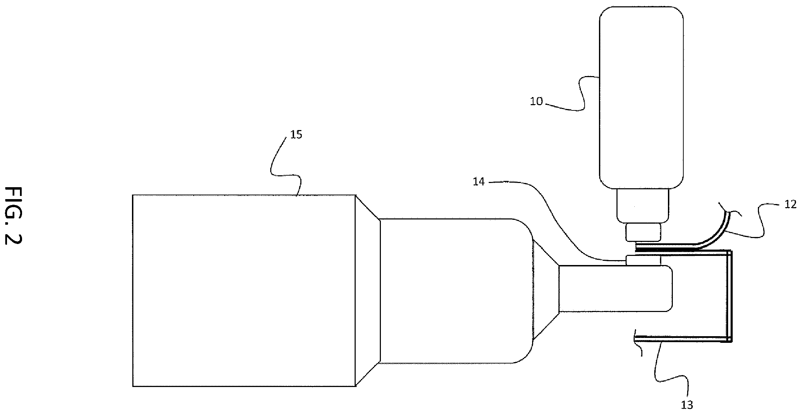

[Fig. 2] montre comment pour effectuer un point de soudure entre la pièce de tôle 13 et la pièce de tôle 12, la pince est approchée en position ouverte des pièces de tôles 12, 13, préalablement plaquées l'une contre l'autre. Une extrémité du bras 15 qui porte l'électrode 14, est introduite entre les deux branches du profilé en U, amenant l'électrode 11 du bras 10 en surplomb de la face supérieure de la pièce de tôle 12. Le bras 15 est ensuite levé jusqu'à mettre l'électrode 14 en contact avec une face inférieure de la branche 18 de la pièce de tôle 13. Dans l'exemple d'approche illustré par la figure 1, l'opérateur n'a pas introduit l'extrémité du bras 15 suffisamment profondément dans le profilé de sorte que l'électrode 14 vient en contact du bord de la branche 18.

Lorsque l'opérateur ferme la pince comme représenté en figure 2, le bras supérieur 10 descend jusqu'à mettre en contact l'électrode 11 avec la face supérieure de la pièce de tôle 12. L'électrode 11 se retrouve face à l'électrode 14 en bord de tôle 12. Lorsqu'une partie des surfaces des électrodes 11, 14 sont hors de contact avec les pièces de tôle 12, 13 comme représenté sur la figure 2, les surfaces de contact des électrodes 11 et 14 est inférieure à la surface totale des électrodes 11 et 14. Lorsqu'on fait passer un courant entre les électrodes 11 et 14, la surface du point de soudure est inférieure à la surface d'un point de soudure obtenu lorsque la totalité des électrodes est en contact avec les pièces de tôle. La soudure est fragilisée.

Par ailleurs, un point de soudure en bord de tôle rend cette zone agressive, et peut détériorer le joint d'étanchéité appelé à être positionné dans le profilé constitué par la pièce de tôle 13.

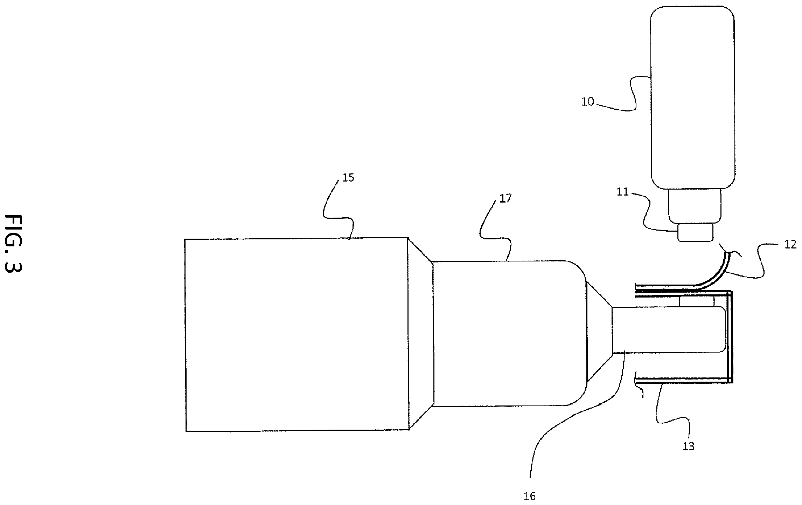

[Fig. 3] montre la pince de soudure par point approchée en position ouverte jusqu'à faire buter l'extrémité 16 du bras 15 contre le fond du profilé constituant la pièce de tôle 13.

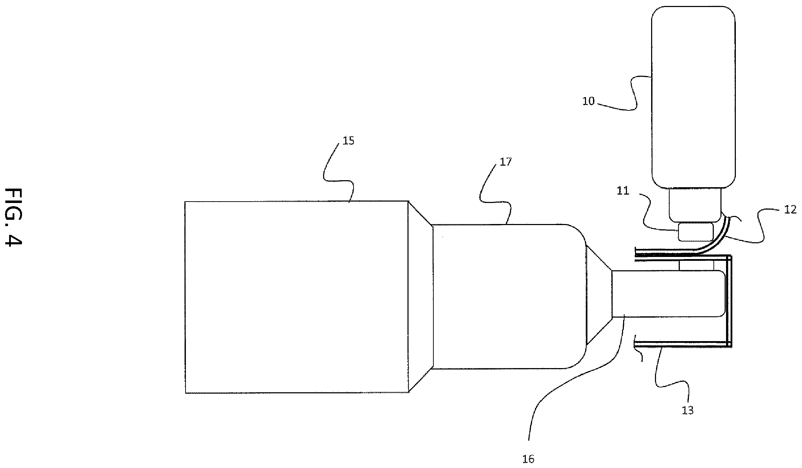

[Fig. 4] montre la pince de soudure par point en position fermée dans un cas extrême pour lequel une courbure de la pièce de tôle 12 empêche d'approcher suffisamment l'électrode 11 de l'électrode 14 pour faire passer correctement le courant électrique entre les électrodes 11 et 14 avec pour effet d'obtenir une soudure fragile, voire une absence pure et simple de soudure.

Par ailleurs, un point de soudure proche du fond du profilé, outre qu'il modifie la zone d'aspect, peut porter atteinte à une étanchéité optimale.

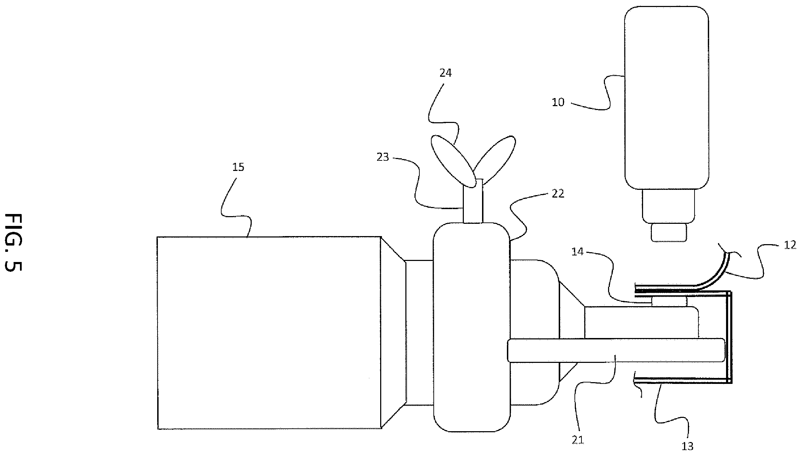

[Fig. 5] montre la pince de soudure par point approchée en position ouverte lorsqu'elle est équipée d'un dispositif conforme à l'invention. Le bras inférieur 15 comprend un guide de butée contre la première pièce de tôle 13.

Le guide de buté comprend une excroissance 21 qui s'étend le long du bras inférieur 15 au-delà de l'extrémité 16 du bras 15 d'une distance suffisante pour positionner l'électrode 14 au bon endroit sur la branche 18 du profilé constitué par la pièce de tôle 13. Le dépassement de l'excroissance 21 au-delà de l'extrémité 16 du bras 15, est de longueur telle que l'électrode 14 et l'électrode 11 qui la surplombe, sont à distance suffisante du bord des pièces de tôle et du fond du profilé pour obtenir une soudure optimale.

L'excroissance 21 s'étend le long du bras inférieur 15 excroissance 21 s'étend le long du bras inférieur 15 dans une direction perpendiculaire au bras supérieur 10 de sorte que la distance qui sépare l'électrode 11 de la face supérieure de la pièce de tôle 12 est indépendante de la longueur de l'excroissance 21.

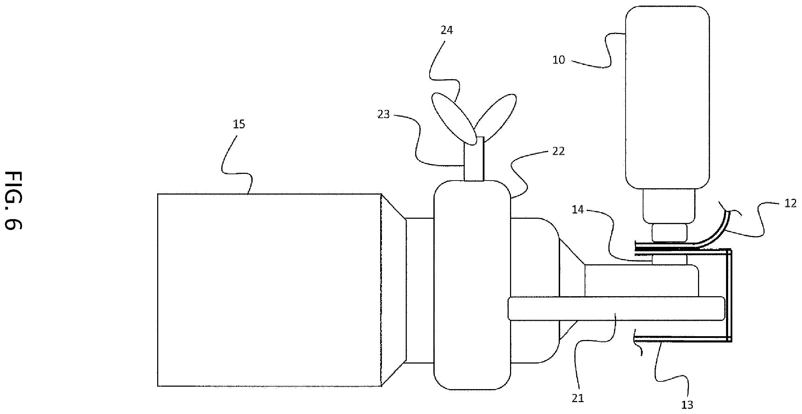

[Fig. 6] montre la pince de soudure par point en position fermée avec mise en contact de l'électrode 14 sur la face inférieure de la pièce de tôle 13, et de l'électrode 11 sur la face supérieure de la pièce de tôle 12 en un point qui permet d'obtenir une soudure optimale par passage de courant électrique à travers les deux pièces de tôle.

Le guide de butée pourrait être fixé de façon inamovible une fois pour toute sur le bras 15, voire faire partie du bras 15 revenu de matière. Avantageusement, le guide de buté comprend un corps de guide 22 solidaire de l'excroissance 21 et agencé pour coulisser le long d'une partie 17 du bras inférieur 15. Il devient ainsi possible d'adapter la pince de soudure à la géométrie des pièces à souder pour obtenir une soudure optimale.

L'excroissance 21 peut se présenter sous forme d'une tige qui comporte une extrémité arrondie de mise en contact avec la pièce de tôle de manière à ne pas blesser la tôle lors d'une mise en contact.

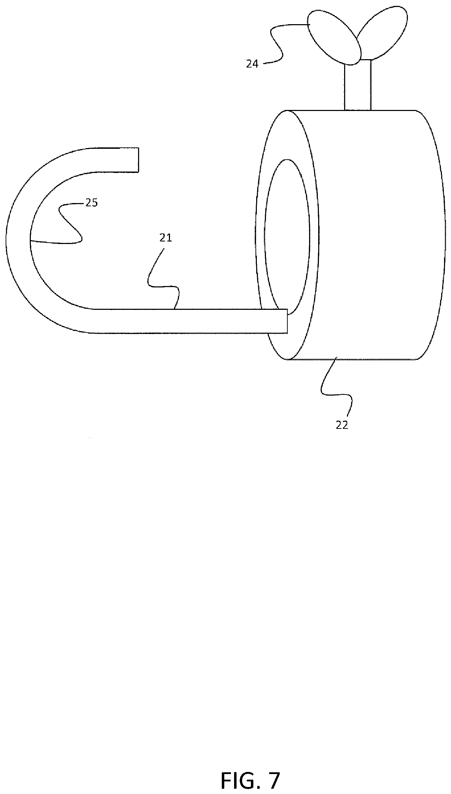

[Fig. 7] montre un guide de butée pour lequel le corps de guide 22 est sous forme d'un tube, particulièrement adapté pour une partie 17 cylindrique du bras inférieur 15. Le corps de guide 22 a un diamètre intérieur juste supérieur au diamètre extérieur de la partie 17 du bras inférieur 15 de manière à permettre un coulissement et/ou une rotation du corps de guide 22 sur la partie 17 du bras inférieur 15.

L'excroissance 21 comprend ici une extrémité en forme d'arc de cercle dont le sommet 25 est de préférence sur l'axe de rotation du corps de guide 22. Ainsi l'extrémité arrondie de l'excroissance 21, en d'autres termes le sommet de l'arc de cercle, peut pivoter sur le point de contact avec la pièce de tôle 13 lorsque le corps de guide 22 tourne sur lui-même, sans décrire d'arc de cercle sur la pièce de tôle, et par conséquent avec un moindre risque de la rayer.

Le corps de guide 22 comprend une vis 23 qui permet de bloquer le coulissement et/ou la rotation du corps de guide 22 sur la partie 17 du bras inférieur 15. De la sorte, l'extrémité de l'excroissance 21 est maintenue à distance constante de l'électrode 14 et permet une bonne répétabilité du positionnement de électrodes sur des points successifs de soudure d'un même véhicule, et d'une pluralité de véhicules de même type.

Le guide de butée pourrait être réalisé en acier. Une réalisation du guide de butée en un matériau léger et résistant, par exemple en aluminium, facilite sa manipulation, son transport et sa mise en place.

Une ou deux ailettes 24 en sommet de vis, facilitent la mise en rotation de la vis, facilitant ainsi blocage et un déblocage du coulissement et/ou de la rotation du corps de guide 22 sur la partie 17 du bras inférieur 15.

En éloignant la pince de soudure des pièces de tôle, il devient possible de monter et de démonter le guide de butée sur la pince de soudure par coulissement du corps de guide 22 sur la partie 17 du bras inférieur 15.

Le procédé de soudure par points au moyen d'une pince de soudure, exposé à présent, garantit une position répétable parfaite d'une succession de points de soudure. Ce qui permet d'obtenir une qualité de soudure d'un profilé sur toute la partie d'un cadre de porte de véhicule automobile destinée à recevoir le profilé. Le profilé constituant une première pièce de tôle, et le cadre de porte constituant une deuxième pièce de tôle de carrosserie.

## Revendications

1. Pince de soudure par point comprenant un bras inférieur (15) portant une première électrode (14), et un bras supérieur (10) portant une deuxième électrode (11) pour effectuer un point de soudure entre une première pièce de tôle (13) et une deuxième pièce de tôle (12) par mise en contact de la première électrode (14) avec la première pièce de tôle (13) et de la deuxième électrode (11) la deuxième pièce de tôle (12), le bras inférieur (15) comprenant un guide de butée contre la première pièce de tôle (13), **caractérisé en ce que** le guide de butée comprend une excroissance (21) qui s'étend le long du bras inférieur (15) dans une direction perpendiculaire au bras supérieur (10) le guide de butée comprenant un corps de guide (22) solidaire de l'excroissance (21) et agencé pour coulisser le long d'une partie (17) du bras inférieur (15).

2. Pince de soudure selon la revendication 1, **caractérisé en ce que** la partie (17) du bras inférieur (15) est cylindrique et **en ce que** le corps de guide (22) est un tube de diamètre intérieur juste supérieur à un diamètre extérieur de la partie (17) du bras inférieur (15) pour permettre un coulissement et/ou une rotation du corps de guide (22) sur la partie (17) du bras inférieur (15).

3. Pince de soudure selon la revendication 2, **caractérisé en ce que** le corps de guide (22) comprend une vis (23) pour bloquer le coulissement et/ou la rotation du corps de guide (22) sur la partie (17) du bras inférieur (15).

4. Pince de soudure selon la revendication 3, **caractérisé en ce que** la vis (23) comporte au moins une ailette (24) pour faciliter un blocage et un déblocage du coulissement et/ou de la rotation du corps de guide (22) sur la partie (17) du bras inférieur (15).

5. Pince de soudure selon l'une des revendication 1 à 4, **caractérisé en ce que** le guide de butée est montable et démontable sur la pince de soudure par coulissement du corps de guide (22) sur la partie (17) du bras inférieur (15).

6. Pince de soudure selon l'une des revendication 1 à 5, **caractérisé en ce que** l'excroissance (21) comporte une extrémité arrondie de mise en contact avec la pièce de tôle.

7. Procédé de soudure par points d'une première pièce de tôle (13) profilée sur une deuxième pièce de tôle (12) de carrosserie au moyen de la pince de soudure selon l'une des revendications 1 à 6, comportant des étapes consistant à :
- monter libre en translation un guide de butée sur un bras inférieur (15) de la pince de soudure ;
- amener une première électrode (14) solidaire du bras inférieur (15) contre la première pièce de tôle (13) en un point précis de la première pièce de tôle (13) ;
- déplacer le guide de butée jusqu'à le mettre en contact avec la première pièce de tôle (13) ;
- bloquer en translation le guide de butée sur le bras inférieur (15) de la pince de soudure ;
- amener la pince de soudure successivement contre plusieurs points de la première pièce de tôle (13) pour effectuer une succession de points de soudure.

## Patentansprüche

1. Punktschweißzange, aufweisend einen unteren Arm (15), der eine erste Elektrode (14) trägt, und einen oberen Arm (10), der eine zweite Elektrode (11) trägt, zum Ausführen eines Schweißpunktes zwischen einem ersten Blechteil (13) und einem zweiten Blechteil (12) durch Inkontaktbringen der ersten Elektrode (14) mit dem ersten Blechteil (13) und der zweiten Elektrode (11) dem zweiten Blechteil (12), wobei der untere Arm (15) eine Anschlagführung gegen das erste Blechteil (13) aufweist, **dadurch gekennzeichnet, dass** die Anschlagführung einen Vorsprung (21) aufweist, der sich entlang des unteren Arms (15) in eine senkrecht zu dem oberen Arm (10) verlaufende Richtung erstreckt, wobei die Anschlagführung einen Führungskörper (22) aufweist, der fest mit dem Vorsprung (21) verbunden ist und dazu eingerichtet ist, entlang eines Teils (17) des unteren Arms (15) zu gleiten.

2. Schweißzange nach Anspruch 1, **dadurch gekennzeichnet, dass** der Teil (17) des unteren Arms (15) zylindrisch ist und dass der Führungskörper (22) ein Rohr mit einem Innendurchmesser ist, der knapp größer als ein Außendurchmesser des Teils (17) des unteren Arms (15) ist, um ein Gleiten und/oder ein Drehen des Führungskörpers (22) auf dem Teil (17) des unteren Arms (15) zu ermöglichen.

3. Schweißzange nach Anspruch 2, **dadurch gekennzeichnet, dass** der Führungskörper (22) eine Schraube (23) aufweist, um das Gleiten und/oder das Drehen des Führungskörpers (22) auf dem Teil (17) des unteren Arms (15) zu blockieren.

4. Schweißzange nach Anspruch 3, **dadurch gekennzeichnet, dass** die Schraube (23) mindestens einen Flügel (24) umfasst, um ein Blockieren und Freigeben des Gleitens und/oder des Drehens des Führungskörpers (22) auf dem Teil (17) des unteren Arms (15) zu erleichtern.

5. Schweißzange nach einem der Ansprüche 1 bis 4, **dadurch gekennzeichnet, dass** die Anschlagführung auf der Schweißzange durch Gleiten des Führungskörpers (22) auf dem Teil (17) des unteren Arms (15) montierbar und demontierbar ist.

6. Schweißzange nach einem der Ansprüche 1 bis 5, **dadurch gekennzeichnet, dass** der Vorsprung (21) ein gerundetes Ende zum Inkontaktbringen mit dem Blechteil umfasst.

7. Verfahren zum Punktschweißen eines profilierten ersten Blechteils (13) an ein zweites Blechteil (12) einer Karosserie mittels der Schweißzange nach einem der Ansprüche 1 bis 6, umfassend Schritte, die darin bestehen:
- eine Anschlagführung verschiebbar an einem unteren Arm (15) der Schweißzange anzubringen;
- eine erste Elektrode (14), die fest mit dem unteren Arm (15) verbunden ist, an das erste Blechteil (13) an einem präzisen Punkt des ersten Blechteils (13) zu führen;
- die Anschlagführung zu bewegen, bis sie mit dem ersten Blechteil (13) in Kontakt gebracht ist;
- die Verschiebung der Anschlagführung auf dem unteren Arm (15) der Schweißzange zu blockieren;
- die Schweißzange nacheinander an mehrere Punkte des ersten Blechteils (13) zu führen, um eine Folge von Schweißpunkten auszuführen.

## Claims

1. Spot welding tongs comprising a lower arm (15), bearing a first electrode (14), and an upper arm (10), bearing a second electrode (11), for effecting a spot weld between a first piece of sheet metal (13) and a second piece of sheet metal (12) by bringing the first electrode (14) into contact with the first piece of sheet metal (13) and the second electrode (11) with the second piece of sheet metal (12), the lower arm (15) comprising a guide for abutment against the first piece of sheet metal (13), **characterized in that** the abutment guide comprises a protuberance (21) that extends along the lower arm (15) in a direction perpendicular to the upper arm (10), the abutment guide comprising a guide body (22) as one with the protuberance (21) and arranged to slide along a part (17) of the lower arm (15).

2. Welding tongs according to Claim 1, **characterized in that** the part (17) of the lower arm (15) is cylindrical and **in that** the guide body (22) is a tube with an inside diameter just greater than an outside diameter of the part (17) of the lower arm (15), so as to allow sliding and/or rotation of the guide body (22) on the part (17) of the lower arm (15).

3. Welding tongs according to Claim 2, **characterized in that** the guide body (22) comprises a screw (23), so as to block the sliding and/or rotation of the guide body (22) on the part (17) of the lower arm (15).

4. Welding tongs according to Claim 3, **characterized in that** the screw (23) has at least one fin (24), so as to make blocking and unblocking of the sliding and/or rotation of the guide body (22) on the part (17) of the lower arm (15) easier.

5. Welding tongs according to one of Claims 1 to 4, **characterized in that** the abutment guide is able to be mounted on and removed from the welding tongs by sliding the guide body (22) on the part (17) of the lower arm (15) .

6. Welding tongs according to one of Claims 1 to 5, **characterized in that** the protuberance (21) has a rounded end for bringing into contact with the piece of sheet metal.

7. Method for spot welding a first, profiled piece of sheet metal (13) to a second, bodywork piece of sheet metal (12) by means of the welding clamp according to one of Claims 1 to 6, involving the steps of:
- mounting, so as to be free to move in translation, an abutment guide on a lower arm (15) of the welding tongs;
- bringing a first electrode (14) as one with the lower arm (15) against the first piece of sheet metal (13) at a precise point on the first piece of sheet metal (13) ;
- moving the abutment guide until it is brought into contact with the first piece of sheet metal (13);
- blocking, in translation, the abutment guide on the lower arm (15) of the welding tongs;
- bringing the welding tongs successively against a plurality of points on the first piece of sheet metal (13), so as to effect a succession of spot welds.
